# EUROPEAN PATENT SPECIFICATION

(11) **EP 2 016 832 B1**
(45) Date of publication and mention of the grant of the patent: **12.04.2017**
(21) Application number: 07425364.2
(22) Date of filing: 11.06.2007
(51) Int. Cl.: A23C 19/068, A23C 19/097, B65B 9/04, B65B 25/06, B65D 43/16

(54) **Method for producing a dairy product and system for packaging the same**
Verfahren zur Herstellung eines Milchprodukts und Verpackungssystem dafür
Procédé pour la fabrication d'un produit laitier et système pour le conditionner

(43) Date of publication of application: 21.01.2009
(73) Proprietor: Egidio Galbani S.r.l., 20149 Milano (IT)
(72) Inventor: Mattei, Gianfranco, 20149 Milano (IT)
(74) Representative: Petraz, Davide Luigi

(56) References cited:
- EP-A1- 0 919 488
- WO-A-03/099658
- US-A- 4 226 888
- US-A- 4 898 745
- US-A- 5 709 900
- US-A1- 2002 187 237
- US-B1- 6 440 481

## Description

The present invention relates to a method for producing and packaging a dairy product, particularly mozzarella cheese, and a packaging method therefor which is studied to facilitate the handling and improve preservability of the latter.

Mozzarella cheese is a fresh pasta filata cheese, typical of Mediterranean tradition. Pasta filata cheese is characterised by a particular processing of milk - either cow or buffalo milk - which provides, after curdling, the ripening of the paste either in or out the whey until it reaches the proper curd demineralization rate for stretching. In modern processing, in addition to acidification with lactic microflora, proper demineralization can be also obtained by acidifying the milk with citric, lactic, acetic acid; in this case, a ripening step will not take place, but only a step of drip/drying of the curd from excess whey.

The curd is then stretched, either mechanically or more traditionally manually by skilled operators, and then modelled into traditional shapes, i.e. round or plaited or even in blocks.

The stretched paste can be left almost to dry or can be preserved in a so-called preserving liquid, which is typically water or salted water. In the first case, a cheese is obtained that has a soft, elastic, compact and dry texture, which is typically used as a dressing for pizza, or however for kitchen use. For this stretched paste, cow milk is normally used.

In the second case, on the other hand, the stretched paste that is preserved in the preserving liquid, generates a cheese that is fresh, soft, very wet, juicy, with milky fragrance, i.e. the actual mozzarella cheese, either made of cow or buffalo milk.

Mozzarella cheese is then sold packaged in sealed bags, or trays, or air-tight sealed containers, in which the cheese is dipped within the preserving liquid thereof, which is indispensable for maintaining its peculiar freshness and humidity characteristics. Particularly, the preserving liquid serves to keep a hydrated surface of the mozzarella cheese, thereby preventing yellowing due to dehydration.

However, this preservation system suffers from some drawbacks. First of all, upon consumption, the mozzarella cheese must be dripped from the preserving liquid, which sometimes is uncomfortable and normally requires preforming this operation in the vicinity of a sink or however a container receiving the dripped liquid. Furthermore, if the mozzarella is not entirely consumed, the preservation of the latter is more difficult, due to the presence of the preserving liquid within a packaging which is no longer sealed, but opened. It should be noted that the mozzarella cheese which is normally available on the market is not single-portion packaged, therefore it is very likely to require preservation after the package has been opened.

It has been further ascertained by the authors of the present invention that the preserving liquid favours the microbiological contamination of the mozzarella cheese by ubiquitous microflora such as pseudomonadacae and coliformi, such that, once opened, it rapidly deteriorates and takes an acid and bitter, quite unpalatable taste. As these micro-organisms use the mozzarella lactose for growing, the fresh sensation and milk taste of which the lactose is the major responsible, also tend to rapidly fade.

Documents US-B-6,440,481, US-A-4,898,754 disclose a method of making a pasta filata cheese comprising melting the curd by means of steam injection and then molding the molten product by means of pumping and then filling various size packages.

Document US-A-2002/0187237 discloses a method of making processed cheese by preparing a blend of youn low-sodium-chloride cheese, hydrocolloids and emulsifying salts, cooking the blend, holding the blend at an elevated temperature and then chill-roll or hot filling packaging.

Document WO-A-03/099658 discloses a packaging consisting of deformable plastic having two shells interconnected in a sealing plane to form a hollow body.

The problem at the heart of the present invention is thus to provide a pasta filata cheese, typically a mozzarella cheese, and a packaging system that affords, on the one hand, the freshness and better preservability, on the other hand is more manoeuvrable and more comfortable to use.

This problem is solved by a method for producing and packaging a pasta filata cheese and a packaging system for the thus-obtained cheese, such as set forth in the annexed claims, the object of which is an integral part of the present description.

Further features and advantages of the present invention will be better understood from the description of an exemplary embodiment thereof, which is given below by way of non-limiting illustration, with reference to the following figures:
Fig. 1 shows a schematic view of the production line for the inventive method;
Fig. 2 shows a perspective view, in an opened condition, of a package according to the present invention.

The problem addressed by the present invention is solved by a method for producing and packaging a pasta filata cheese which provides for eliminating the preserving liquid. The pasta filata cheese is preferably a mozzarella cheese made of cow or buffalo milk.

It has been surprisingly found that the elimination of the preserving liquid not only has the advantage of reducing the danger of microbiological contamination of the cheese, thus improving the preservability thereof, but also of extending the freshness sensation, the typical milk taste of mozzarella cheese and the sapidity thereof. In fact, the authors of the present invention have noticed that the preserving liquid tends to dilute both salt and lactose that are present in the cheese, which accordingly, after several days of preservation, even within the closed package, tends to lose many of its organoleptic characteristics.

The following table shows the change of the chemical parameters of a traditional mozzarella cheese, i.e. preserved within the preserving liquid, with the passing of time from the date of preparation. It should be considered that the shelf life of a mozzarella cheese is set at 21 days.

**TABLE I - Change of chemical composition of mozzarella cheese and preserving liquid thereof as a function of the preservation stage**

| | | % weight | **Mozzarella** | **Preserving liquid** |
|---|---|---|---|---|
| BEGINNING OF LIFE | SOLID | CONTENT | 40,12 | 4,14 |
| | | LACTOSE | 2,5 | 0,5 |
| | | NaCl | 0,56 | 0,6 |
| HALF LIFE | SOLID | CONTENT | 39,07 | 4,84 |
| | | LACTOSE | 1,3 | 1,6 |
| | | NaCl | 0,53 | 0,72 |
| END LIFE | SOLID | CONTENT | 40,88 | 5,4 |
| | | LACTOSE | 0, 93 | 1,66 |
| | | NaCl | 0,47 | 0,68 |

As may be seen from the data shown in Table I, as days go by, the mozzarella cheese is deprived of salt and mainly lactose, which pass to the preserving liquid.

The production and packaging method of this invention allows, instead, to maintain unchanged the chemical parameters of the mozzarella cheese, thus extending the freshness sensation, sapidity and milk taste of the cheese.

The method for producing the stretched paste according to the present invention differs from the method that is traditionally employed, in that the stretched paste is, after it has been modelled into the suitable shapes, hot-packaged without being subjected to a step of cooling and treatment with the preserving liquid.

The method for producing the stretched paste according to the present invention can be summarized as follows.

The milk, which is standardized such as to obtain a ratio of fat to protein = 1, is pasteurised. Pasteurization is preferably carried out at about 74°C and for about 18 seconds.

Coagulation takes place by adding a suitable amount of citric acid and a coagulant such as a rennet enzyme or a chemical coagulant, preferably at a temperature ranging between 30°C and 40°C, typically about 36°C. The coagulation takes place in about 3.5 minutes, after which a consolidation time, preferably about 2 minutes is followed.

The thus-obtained curd is dripped before being subjected to stretching. The dripping time preferably ranges between 30 minutes and 1 hour.

The stretching step is carried out by introducing the curd in water or water added with salt and cream, such as to have a salt ratio of 1-2% by weight, preferably about 1.5%, and a percentage of fat ranging between 7% and 12% by weight, preferably 10%. The stretching liquid is brought to a temperature higher than 80°C, preferably about 90-91°C and the curd is stretched and modelled according to conventional techniques, preferably in moulds of a suitable shape.

The production method described above is detailed in the patent publication EP 1 516 529 A1, of which the relevant description is incorporated herein with particular reference to pages 4-16 and example 1.

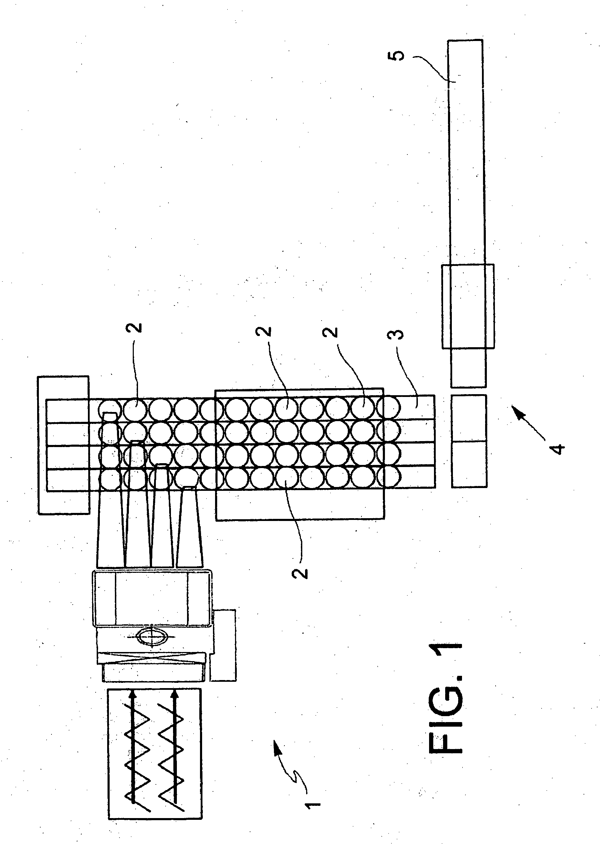

At this stage, the inventive method differs from the conventional method in that the stretched and modelled paste is hot-packaged. Preferably, the packaging operation, which is schematically shown in Fig. 1, takes place when the stretched and modelled paste has a temperature higher than 50°C, more preferably about 60°C. The hot packaging is indispensable to obtain the desired effects, particularly the preservability of the organoleptic characteristics and the high humidity degree also in the absence of the preserving liquid. The hot packaging further allows for a thermal decontamination of the product.

The paste stretched and modelled in the stretching and moulding unit 1, is inserted within suitable containers 2 that are placed on a conveyor belt 3, which conveys the latter to a sealing unit (heat or ultrasonic sealing). The thus-sealed packages are conveyed on a belt 5 to a cooling tunnel, for example a glycol/nitrogen tunnel (not shown).

The packaging step is, in fact, followed by a cooling step (which, on the contrary, in the conventional technique is carried out prior to packaging), which can be extended for a period ranging between 30 minutes and 1.5 hours, preferably about 1 hour.

By "packaging" is meant introducing the product within the container thereof, and sealingly close the container according to conventional methods known to those skilled in the art, such as for example heat-sealing two edges of the package or sealing a peelable or non-peelable laminate to the opening of the container.

As stated above, the packaging is substantially a dry packaging. By "substantially dry packaging" is meant the packaging of the stretched paste without feeding the preserving liquid within the container.

A pasta filata cheese is thus obtained, which has the following chemical-physical parameters:

| | |
|---|---|
| humidity | 62% |
| dry matter | 38% |
| of which: | |
| fat | 17,5% |
| sugar | 2% |
| proteins | 17,5% |
| NaCl | 0,6% |
| Other dry matter | 0,4% |

In a preferred embodiment of the invention, the method for producing and packaging the stretched paste provides for a packaging system which favours the preservation of the product and comfort in using the latter.

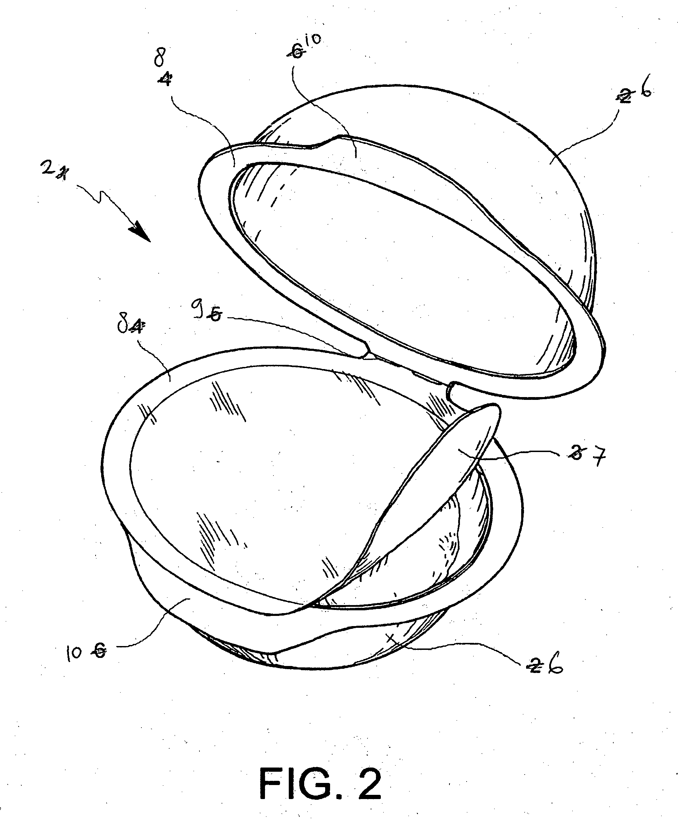

The packaging system of the invention comprises a multi-portion container 2. In the embodiment illustrated in Fig. 2, this multi-portion container 2 consists of two half-shells 6, each of which is intended to receive a portion of pasta filata cheese. On the opening of each of the half-shells 6 a peelable or non-peelable film 7 is sealed, such as to maintain the cheese portions separated and isolated from the external environment. This affords a suitable preservation of the chemical-physical and organoleptic characteristics of the cheese for a more extended time, as one portion at a time is opened, according to the requirements.

The two half-shells 6 have a projecting edge 8 comprising a hinge portion 9, which connects the edges 8 of the two half-shells 6. A tab 10 arranged in a substantially opposing position relative to the hinge portion 9 on both edges 8 of the half-shells 6 makes the container 2 easier to open, after the two half-shells 6 have been re-closed to form the shell of the container.

The container 2 can be made of multilayer PE-PET. Each half-shell 6 is sealed by means of a peelable or non-peelable laminate of the type that is normally used for food, which will be heat- or ultrasonic sealed to the edge 8 of the half-shell 6.

Both half-shells 6, when re-closed to form the container 2, may be fixed to each other with adhesive or heat- or ultrasonic sealing at preset locations along the contour. While a packaging containing two portions of cheese has been described herein above, it is not excluded that a single-portion or multi-portion can be used with three or more portions of stretched paste.

Furthermore, while a spherical or hemispheric shape has been described for the container or half-shells, it is not excluded that a cubic or generally polygonal shape can be provided.

To the purpose, the stretched paste will be modelled into suitable shape and size to be contained within the half-shell, preferably leaving as little empty space as possible. In case the half-shell has a hemispheric shape (as in Fig. 2), the stretched paste will be modelled to a similar shape or ovoidal shape.

The packaging system of the invention allows obtaining a suitable portioning of the cheese, thus providing for single-doses of stretched paste which are isolated from each other, such that the consumption of a cheese portion does not impair the preservability of the other portion. According to the same principle, packaging systems may be obtained which contain more than two portions of pasta filata cheese, which are separated from each other and individually sealed and containing the pasta filata cheese without the preserving liquid.

The advantages of the invention have been all described above, and can be summarized as follows:
- improved preservability, due to the reduced microbiological contamination;
- improved preservation of the organoleptic characteristics of the cheese, particularly the freshness fragrance, sapidity and milk taste;
- with the packaging system of the invention, an improved comfort of use and preservation of the product;
- an improved manoeuvrability of the cheese during the preparation for consumption, by preventing that hands and tools are wetted when the package is being opened and the product dripped.

It will be appreciated that only a particular embodiment of the present invention has been described herein, to which those skilled in the art will be able to make any and all modifications necessary for its adjustment to specific applications, without however departing from the scope of protection of the present invention.

For example, the two or more half-shells, which in the example illustrated in the figures consist of an individual piece that can be hinged-opened, can be also provided as separated valves, which are finally coupled to each other with the methods described above to form the final shell.

## Claims

1. A method for preparing and packaging a pasta filata cheese, comprising a step of substantially dry packaging, i.e. without preserving liquid, and heat packaging of said pasta filata cheese.

2. The method according to claim 1, wherein said step of substantially dry and heat packaging is carried out at a temperature higher than 50°C.

3. The method according to claim 2, wherein said temperature higher than 50°C is a temperature of about 60°C.

4. The method according to any claim 1 to 3, said method comprising the following steps:
(a) standardisation of the milk such as to obtain a ratio of fat to proteins = 1 and subsequent pasteurization of the standardized milk;
(b) coagulation of the pasteurized milk by adding citric acid and a coagulant at a temperature ranging between 30°C and 40°C;
(c) dripping of the curd obtained during step (b) ;
(d) stretching of said curd in water added with salt and cream, such as to have a stretching liquid with a salt ratio of 1-2% by weight and a percentage of fat ranging between 7% and 12% by weight at a temperature higher than 80°C and subsequent modelling into pieces of a preset shape;
(e) the packaging as defined in any claim 1 to 3 and subsequent cooling of the packaged stretched paste for a time ranging between 0.5 and 1.5 hours.

5. The method according to claim 4, wherein said pasteurization of the standardized milk is carried out at a temperature of about 74°C for about 18 seconds.

6. The method according to claim 4 or 5, wherein said coagulation is carried out at a temperature of about 36°C for a time of about 3.5 minutes and is followed by a consolidation step for a time of preferably about 2 minutes.

7. The method according to any claim 4 to 6, wherein said dripping is carried out for a time ranging between 30 minutes and 1 hour.

8. The method according to any claim 4 to 7, wherein said stretching step is carried out in water added with salt and cream, such as to have a salt ratio of about 1.5% and a percentage of fat ranging between 7% and 12%, and at a temperature ranging between 90°C and 91°C.

9. The method according to any claim 1 to 8, wherein said pasta filata cheese is mozzarella cheese.

10. A packaging system comprising a multi-portion container (2), comprising two or more half-shells (6), each containing a portion of a pasta filata cheese such as obtainable according to the method of any claim 1 to 8, wherein within each of said half-shells (6) said pasta filata cheese is packaged in the absence of preserving liquid, each of said half-shells (6) being sealed by means of a sealing peelable or non-peelable film (7) to the opening of said half-shell (6).

11. The packaging system according to claim 10, said multi-portion container (2) being arranged for two portions of pasta filata cheese, said container (2) comprising two half-shells (6) having a projecting edge (8) which comprises a hinge portion (9) connecting the two half-shells (6), a tab (10) being arranged in a substantially opposite position relative to the hinge portion (9) on both edges (8) of the half-shells (6).

12. The packaging system according to claim 10 or 11, wherein said half-shells have a hemispheric, cubic or generally polygonal shape.

13. The packaging system according to claim 12, wherein said portion of pasta filata cheese is a mozzarella cheese.

## Patentansprüche

1. Verfahren zur Herstellung und zur Verpackung eines Pasta-Filata-Käses, umfassend einen Schritt der im Wesentlichen trockenen Verpackung, d.h. ohne Konservierungsflüssigkeit, und der Wärmeverpackung des genannten Pasta-Filata-Käses.

2. Verfahren nach Anspruch 1, worin der genannte Schritt der im Wesentlichen trockenen und der Wärmeverpackung bei einer Temperatur über 50°C erfolgt.

3. Verfahren nach Anspruch 2, worin bei der genannten Temperatur über 50°C es sich um eine Temperatur von ungefähr 60°C handelt.

4. Verfahren nach einem der Ansprüche 1 bis 3, worin das genannte Verfahren die folgenden Schritte umfasst:
(a) Standardisierung der Milch, um ein Verhältnis von Fett zu Proteinen = 1 zu erhalten, und anschließende Pasteurisierung der standardisierten Milch;
(b) Koagulation der pasteurisierten Milch durch Zusatz von Zitronensäure und von einem koagulierenden Stoff bei einer Temperatur von 30°C bis 40°C;
(c) Abtropfen des im Schritt (b) gewonnenen Käsebruchs;
(d) Ausziehen des genannten Käsebruchs im Wasser, dem Salz und Rahm zugesetzt wurden, um dadurch eine Ziehflüssigkeit mit einem Salzverhältnis von 1-2 Gew.-% und einem Fettanteil von 7 bis 12 Gew.-% bei einer Temperatur über 80°C zu erhalten, und anschließende Formung in Stücke mit vorgegebener Form;
(e) Verpackung wie nach einem der Ansprüche 1 bis 3 definiert und anschließende Kühlung des verpackten gezogenen Teigs für einen Zeitraum von 0,5 bis 1,5 Stunden.

5. Verfahren nach Anspruch 4, worin die genannte Pasteurisierung der standardisierten Milch bei einer Temperatur von ungefähr 74°C für ungefähr 18 Sekunden durchgeführt wird.

6. Verfahren nach Anspruch 4 oder 5, worin die genannte Koagulation bei einer Temperatur von ungefähr 36°C für einen Zeitraum von ungefähr 3,5 Minuten durchgeführt und von einem Festigungsschritt für einen Zeitraum von vorzugsweise ungefähr 2 Minuten gefolgt wird.

7. Verfahren nach einem der Ansprüche 4 bis 6, worin das genannte Abtropfen für einen Zeitraum zwischen 30 Minuten und 1 Stunde durchgeführt wird.

8. Verfahren nach einem der Ansprüche 4 bis 7, worin der genannte Schritt des Ausziehens im Wasser, dem Salz und Rahm zugesetzt wurden, um dadurch ein Salzverhältnis von ungefähr 1,5% und einen Fettanteil zwischen 7% und 12% zu erhalten, und bei einer Temperatur zwischen 90°C und 91°C durchgeführt wird.

9. Verfahren nach einem der Ansprüche 1 bis 8, worin es sich bei dem genannten Pasta-Filata-Käse um Mozzarella-Käse handelt.

10. Verpackungssystem umfassend einen Mehrportion-Behälter (2), der zwei oder mehrere Halbschalen (6) umfasst, die jeweils eine Portion von Pasta-Filata-Käse enthalten, so wie dieser nach dem Verfahren gemäß einem der Ansprüche 1 bis 8 erhalten werden kann, worin innerhalb jeder der genannten Halbschalen (6) der genannte Pasta-Filata-Käse in Abwesenheit von Konservierungsflüssigkeit verpackt wird, wobei jede der genannten Halbschalen (6) mittels einer peelbaren oder nicht-peelbaren Verschlussfolie (7) an der Öffnung der genannten Halbschale (6) verschlossen wird.

11. Verpackungssystem nach Anspruch 10, worin der genannte Mehrportion-Behälter (2) für zwei Portionen von Pasta-Filata-Käse eingerichtet ist, wobei der genannte Behälter (2) zwei Halbschalen (6) umfasst, die ein vorstehendes Rand (8) aufweisen, das einen Scharnierteil (9) umfasst, der die zwei Halbschalen (6) verbindet, worin eine Lasche (10) in einer dem Scharnierteil (9) im Wesentlichen entgegengesetzten Stellung an beiden Rändern (8) der Halbschalen (6) angeordnet ist.

12. Verpackungssystem nach Anspruch 10 oder 11, worin die genannten Halbschalen eine halbkugelförmige, würfelförmige oder im Allgemeinen polygonale Form aufweisen.

13. Verpackungssystem nach Anspruch 12, worin es sich bei der genannten Portion von Pasta-Filata-Käse um Mozzarella-Käse handelt.

## Revendications

1. Procédé de production et de conditionnement d'un fromage à pâte filée, comprenant une étape de conditionnement sensiblement à sec, c'est-à-dire sans liquide de préservation, et de conditionnement à la chaleur dudit fromage à pâte filée.

2. Procédé selon la revendication 1, dans lequel ladite étape de conditionnement sensiblement à sec est effectuée à une température supérieure à 50°C.

3. Procédé selon la revendication 2, dans lequel ladite température supérieure à 50°C est une température d'environ 60°C.

4. Procédé selon n'importe laquelle des revendications 1 à 3, ledit procédé comprend les étapes suivantes :
(a) standardisation du lait de manière à obtenir un rapport matière grasse/protéines = 1, et en suite pasteurisation du lait standardisé ;
(b) coagulation du lait pasteurisé par l'ajout d'acide citrique et d'un coagulant à une température comprise entre 30°C et 40°C ;
(c) égouttage du caillé obtenu pendant l'étape (b) ;
(d) étirage dudit caillé dans de l'eau additionnée de sel et de crème, de manière à obtenir un liquide d'étirage avec un rapport de sel d'1-2% en poids et un pourcentage de matière grasse compris entre 7% et 12% en poids, à une température supérieure à 80°C et en suite moulage en pièces de forme prédéterminée ;
(e) conditionnement selon n'importe laquelle des revendications 1 à 3, et en suite refroidissement de la pâte étiré conditionnée pour un temps compris entre 0,5 et 1,5 heures.

5. Procédé selon la revendication 4, dans lequel ladite pasteurisation du lait standardisé est effectuée à une température d'environ 74°C, pour environ 18 secondes.

6. Procédé selon la revendication 4 ou 5, dans lequel ladite coagulation est effectuée à une température d'environ 36°C pour un temps d'environ 3,5 minutes et est suivie d'une étape de consolidation pour un temps de préférence d'environ 2 minutes.

7. Procédé selon n'importe laquelle des revendications 4 à 6, dans lequel ledit égouttage est effectué pour un temps compris entre 30 minutes et 1 heure.

8. Procédé selon n'importe laquelle des revendications 4 à 7, dans lequel ladite étape d'étirage est effectuée dans de l'eau additionnée de sel et de crème, de manière à obtenir un rapport de sel d'environ 1,5% et un pourcentage de matière grasse entre 7% et 12% et à une température comprise entre 90°C et 91°C.

9. Procédé selon n'importe laquelle des revendications 1 à 8, dans lequel ledit fromage à pâte filée est un fromage de type mozzarella.

10. Système de conditionnement comprenant un récipient multi-portion (2) comprenant deux ou plusieurs demi-coques (6), chacune contenant une portion de fromage à pâte filée pouvant être obtenue avec un procédé selon n'importe laquelle des revendications 1 à 8, dans lequel ledit fromage à pâte filée est conditionné à l'intérieur de chacune desdites demi-coques (6) sans liquide de conservation, chacune desdites demi-coques (6) étant scellée au moyen d'un film pelable ou non-pelable (7) sur l'ouverture de ladite demi-coque (6).

11. Système de conditionnement selon la revendication 10, ledit récipient multi-portion (2) étant destiné à deux portions de fromage à pâte filée, ledit récipient (2) comprenant deux demi-coques (6) comportant un bord en saillie (8) qui comprend une partie en charnière (9) reliant les deux demi-coques (6), une ailette (10) étant prévue dans une position sensiblement opposée à la partie en charnière (9) sur les deux bords (8) des demi-coques (6).

12. Système de conditionnement selon la revendication 10 ou 11, dans lequel lesdites demi-coques présentent une forme hémisphérique, cubique ou généralement polygonale.

13. Système de conditionnement selon la revendication 12, dans lequel ladite portion de fromage à pâte filée est une mozzarella.
